**Europäisches Patentamt**

**European Patent Office**

**Office européen des brevets**

(19)

(11) Veröffentlichungsnummer : **0 046 875**
**B1**

(12) # EUROPÄISCHE PATENTSCHRIFT

(45) Veröffentlichungstag der Patentschrift :
20.09.89

(21) Anmeldenummer : 81105812.2

(22) Anmeldetag : 23.07.81

(51) Int. Cl.⁴ : **B 64 C 13/50**, H 04 B 9/00,
G 06 F 15/50

(54) Anordnung, insbesondere für Luftfahrzeuge zur Übertragung von Steuersignalen.

(30) Priorität : 02.09.80 DE 3032918
25.03.81 DE 3111722

(43) Veröffentlichungstag der Anmeldung :
10.03.82 Patentblatt 82/10

(45) Bekanntmachung des Hinweises auf die Patenterteilung : 20.09.89 Patentblatt 89/38

(84) Benannte Vertragsstaaten :
FR GB IT SE

(56) Entgegenhaltungen :
FR--A-- 2 258 611
FR--A-- 2 391 908
GB--A-- 2 052 185
US--A-- 3 076 510
US--A-- 3 964 020
FREQUENZ, Band 31, Heft 12, Dezember 1977, Seiten 364-368, Berlin DE, K. ERDEL:"Glasfaser-Bussysteme zur Signalübertragung in Bordnetzen"
L'ONDE ELECTRIQUE, Band 56, Heft 12, Dezember 1976, Seiten 589-596, Paris FR; T. HAWKES:"Systèmes de communications optiques à bord d'avions"
IEEE TRANSACTIONS ON AEROSPACE AND ELECTRONIC SYSTEMS, Band AES-11, Heft 5, September , Seiten 841-850; IEEE, New York US; G. BELCHER :"Use of fiber optics in digital automatic flight control systems"
WESTINGHOUSE ENGINEER, Band 31, Heft 4, Juli 1971, Seiten 114-119; Pittsburgh US; M.A. GEYER et al:"Automatic control of aircraft electrical system reduces wiring and improves reliability"

(73) Patentinhaber : **Messerschmitt-Bölkow-Blohm Gesellschaft mit beschränkter Haftung**
**Robert-Koch-Strasse**
**D-8012 Ottobrunn (DE)**

(72) Erfinder : **Wendt, Joachim**
**Harburger Strasse 63 F**
**D-2159 Buxtehude (DE)**

## Beschreibung

Die Erfindung bezieht sich auf ein Leitungssystem der im Oberbegriff des Patentanspruchs angegebenen Art.

Es ist allgemein bekannt, daß bei Flugzeugen die Übertragung von Steuerbewegungen vom Piloten auf die betreffenden Ruder durch mechanische Elemente wie Seilzüge, Gestänge, Drehwellen erfolgt oder durch Einrichtungen, die aus diesen Elementen kombiniert sind. Je nach Anwendungsfall werden diese Einrichtungen durch hydraulische oder elektrische Antriebe unterstützt. Derartige Servosteuerungen werden insbesondere bei Großflugzeugen angewendet. Ein wesentlicher Nachteil dieser Lösungen besteht darin, daß bei Ausfall eines Übertragungselementes die entsprechende Steuerbewegung nicht mehr ausgeführt werden kann. Bei Einbeziehung militärischer Aspekte ergibt sich ein weiterer Nachteil der besagten mechanischen Steuerungen aus deren Verwundbarkeit. Zur Reduzierung der Störanfälligkeit von Flugsteuerungen wurden inzwischen computerunterstützte elektrische Servosteuerungen eingeführt. Hierbei erfolgt die Übertragung der Steuerbefehle in Form digitaler Steuersignale über passive elektrische Leitungen, wie Koaxialkabel. Dieses Prinzip ist unter der Bezeichnung « fly-by-wire » bekannt. Zur Steigerung der Zuverlässigkeit werden die einzelnen Wirkungskreise, einschließlich der zu den jeweiligen Stellgliedern führenden Leitungen, mehrfach, beispielsweise dreifach, ausgeführt. Damit ist ein Wirkungskreis auch dann noch betriebsfähig, wenn zwei der zugehörigen Kabel, etwa durch Beschuß, ausgefallen sind. Diese Konzeption weist jedoch u. a. folgende Nachteile auf :

Derartige Anlagen sind empfindlich gegen elektromagnetische Störfelder (Blitzschlag, Kurzschluß).

Ein vermaschtes Kabelnetz ist infolge von Laufzeitund Reflexionseffekten ohne aktive Elemente in den Knotenpunkten nicht realisierbar.

Infolge der vorgenannten Effekte ist die Verkabelung nur in Form nicht vermaschter funktionsbezogener Stränge ausführbar. Dies bedeutet bei Vierfachauslegung vier Kabel für jedes anzusteuernde Stellglied.

Diese Art der Verkabelung führt bei Verwendung dämpfungsarmer Kabel zu einem erheblichen Leitungsgewicht.

Aus der Zeitschrift « Elektronikpraxis », H.11 1979, S.34, ist es bereits bekannt, Lichtleiter zum Aufbau von Datenbussystemen zu verwenden und diese z. B. an Bord von Schiffen und Flugzeugen oder zur Steuerung von industriellen Prozessen einzusetzen. Unter einem Datenbus versteht man eine innerhalb einer Datenverarbeitungsanlage zur Übertragung von Informationen dienende Leitung, über die alle Funktionseinheiten der Anlage im getakteten Telegrammverkehr miteinander korrespondieren. Derartige Datenbusse können sowohl als Sternbus oder als T-Bus aufgebaut sein. Beim Sternbus laufen die Anschlußleitungen aller Funktionseinheiten (Teilnehmer) in einem Sternkoppler zusammen. Beim T-Bus ist jeder Teilnehmer über einen T-Koppler an den Datenbus angeschlossen. Dabei weist der jeweilige Bus infolge der vorgenannten Koppler eine verzweigte Form auf. Obwohl die Lichtleitertechnik im Hinblick auf deren Anwendung für Flugsteuerungen wesentliche Vorteile z. B. bezüglich Gewicht und Zuverlässigkeit verspricht, weisen sowohl das Stern- als auch das T-Bus-Konzept den Nachteil auf, daß jeder Teilnehmer über nur eine Leitung mit dem restlichen System in Verbindung steht. Daraus folgt, daß bei Ausfall einer derartigen Leitung auch die Funktion des betreffenden Teilnehmers ausfällt. Bei einer Flugsteuerung würde dies bedeuten, daß bei Ausfall einer entsprechenden Leitung — etwa durch eine örtliche Beschädigung infolge eines Versagens dritter Komponenten — evtl. eine lebenswichtige Steuerfunktion ausfallen würde.

Der US-Zeitschrift Aircraft Engineering, Volume 49, Number 1, January 1977, Seiten 4-10, M. Scott : Electrical Flight Control for Boeing YC-14, ist eine Flugsteuerung mit Lichtleitern zu entnehmen. Der elektronische Teil dieser Steuerung basiert auf einem bewährten dreifach ausgeführten fly-by-wire-Konzept, wobei lediglich die für den Datenaustausch zwischen den einzelnen Computer-Einheiten vorgesehenen elektrischen Signalleitungen durch Lichtleiter ersetzt sind. Somit zeigt diese Fundstelle eine Flugsteuerung, wobei die Übertragung von Steuerbefehlen im Computerbereich in Form von digitalen Lichtsignalen über ein dreifach redundantes System von Lichtleitern erfolgt. Bei einer derartigen Flugsteuerung, wobei auch die zu den Servoeinheiten führenden Signalleitungen als Lichtleiter ausgeführt sind, weist jede eine Steuerfläche oder andere Steuerelemente betätigende Servo-Einheit drei Lichtleitereingänge auf, wovon höchstens zwei ausfallen dürfen, damit das Gesamtsystem gerade noch funktionsfähig ist. Falls alle drei mit einer Servo-Einheit verbundenen Lichtleiter gleichzeitig ausfallen, bedeutet dies den Ausfall der betreffenden Steuerfunktion. Dieser gleichzeitige Ausfall von drei mit einer Servo-Einheit verbundenen Lichtleitern kann außer durch Beschuß auch durch Versagen anderer Flugzeugkomponenten bewirkt werden. So können entsprechende Schäden an Lichtleitern bei Versagen eines Druckspantes entstehen oder bei Versagen eines Triebwerkes, wobei die Schäden durch umherfliegende abgerissene Turbinenschaufeln verursacht werden.

Demgemäß liegt der Erfindung die Aufgabe zugrunde, ein gattungsgemäßes Leitungssystem derart auszubilden, daß die Funktionsfähigkeit aller Servo-Einheiten auch dann erhalten bleibt, wenn eine Vielzahl von Lichtleitern ausgefallen ist.

Diese Aufgabe wird bei einem gattungsgemäßen System durch die kennzeichnenden Merkmale des Patentanspruchs gelöst.

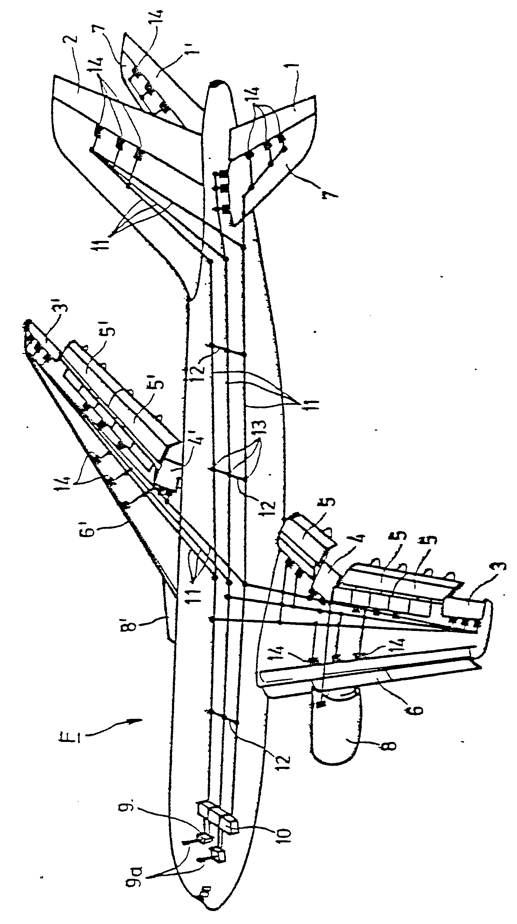

Die Erfindung ist in der Zeichnung anhand eines Beispiels dargestellt und in der Beschreibung näher erläutert.

Die Darstellung zeigt eine Anordnung zur Übertragung von Steuersignalen einschließlich der beteiligten Funktionseinheiten für ein Flugzeug mit einem aus Lichtleitern bestehenden Leitungssystem.

Das Flugzeug F weist die üblichen Steuerflächen auf, und zwar zwei Höhenruder 1,1', ein Seitenruder 2, zwei Langsamflug-Querruder 3,3', zwei Schnellflug-Querruder 4,4', Landeklappen 5, 5', Nasenklappen 6, 6' und eine Höhenflosse 7. Zum Flugzeug F gehören u. a. die Triebwerke 8, 8' sowie die Steuerorgane 9, wobei die schematische Darstellung die Steuersäulen 9 a und Pedale andeutet. Das Leitungssystem zur Übertragung von Steuersignalen weist hauptsächlich mehrere Signalprozessoren 10 und ein aus Längsleitungen 11 und Querleitungen 12 bestehendes mehrfach vermaschtes Netzwerk aus Lichtleitern auf, das mit adressierbaren Servo-Einheiten 14 in Verbindung steht. Knotenpunkte 13 bestehen dabei aus Verzweigungen bekannter Art, z. B. in Form von Stern- oder T-Kopplern. Die Steuerorgane 9 sind derart ausgeführt, daß sie ein dem Steuerbefehl entsprechendes digitales Lichtsignal liefern. Die an der Peripherie des Netzwerkes angeordneten Servo-Einheiten 14 verfügen über Einrichtungen zur Umwandlung des ankommenden Lichtsignals in eine Steuerbewegung. Außerdem weisen sie Einrichtungen auf, die die momentane Stellung z. B. eines Ruders ermitteln und ein entsprechendes Lichtsignal an die Längsleitungen 11 abgeben. Der zwischen den Signalprozessoren 10 und den über die Längsleitungen 11 angeschlossenen peripheren Geräten ablaufende Datenverkehr wird zyklisch durchgeführt, d. h. die Signalprozessoren 10 geben in festem Abfragetakt adressierte Informationssignale z. B. an die Servo-Einheiten 14 ab, die diese wiederum mit adressierten Informationssignalen beantworten. Der hierbei ablaufende Datenverkehr ist in Form von Telegrammen mit fester Wortlänge definiert. Diese Telegramme sind einer Trägerfrequenz in Form einer digitalen Frequenzmodulation aufgeprägt, wobei das Lichtsignal letztlich eine der Trägerfrequenz entsprechende Amplitudenmodulation aufweist. Hierdurch wird eine sehr hohe Störsicherheit gegenüber eventueller Fremdlichteinstreuung erreicht. Aufgrund der Vermaschung ist sichergestellt, daß das Signal auf vielen Wegen von den Signalprozessoren 10 zu der angesprochenen Servo-Einheit 14 gelangt, wodurch die Zuverlässigkeit des Systems weiter erhöht wird. Das dargestellt, System ist dreifach ausgeführt, d. h. im Rumpf, im Flügel sowie in den Leitwerken sind drei Längsleitungen 11 mit entsprechenden Querleitungen 12 angeordnet und pro Ruder, Steuerfläche oder dgl. sind drei Servoeinheiten 14 vorgesehen. Die Signalprozessoren 10 enthalten den Hauptsteuerkreis der gesamten Anordnung. Auch diese Einheit ist zur Steigerung der Zuverlässigkeit dreifach ausgeführt.

Die Darstellung zeigt, daß auch dieses Leitungssystem im Prinzip nur dreifach redundant ausgeführt ist, wenn man die Redundanz lediglich auf die Längsleitungen 11 bezieht. Infolge der Vermaschung mittels der Querleitungen 12 ist die Redundanz dieser Lösung gegenüber bisherigen jedoch um ein Vielfaches höher. Zur Erläuterung wird die Auswirkung einer Beschädigung aller drei im Rumpf des Flugzeuges befindlichen Längsleitungen 11 betrachtet. Bei bisherigen Systemen dieser Art würde der gleichzeitige Ausfall dieser drei Leitungen den völligen Verlust der Manövrierfähigkeit des Flugzeuges bedeuten. Dabei wäre es gleichgültig, in welchem Bereich des Rumpfes jede einzelne Leitung beschädigt würde.

Demgegenüber tritt bei dem erfindungsgemäßen System der Verlust der Manövrierfähigkeit nur dann ein, wenn alle drei Beschädigungen im Bereich zwischen zwei Querleitungen 12 liegen.

Eine übergeordnete Bedeutung der Erfindung ergibt sich daraus, daß sie auf alle Anlagen und Systeme angewendet werden kann, von denen eine extrem hohe Zuverlässigkeit verlangt wird. Hierzu gehören z. B. Steuerungen von Raumfahrzeugen, Prozeß-Steuerungen von Kraftwerken, Stromversorgungsanlagen für Krankenhäuser, insbesondere von Operationsräumen, Intensivstationen, u. s. w.

## Patentanspruch

Passives Leitungssystem aus verzweigten Lichtleitern (11, 12), insbesondere für Luftfahrzeuge, zur Übertragung von digitalen Lichtsignalen zwischen Steuerorganen (9) zur Erzeugung von Steuerbefehlen und Servo-Einheiten (14) zur Betätigung von Steuerflächen (1-5) sowie anderen Steuerelementen, dadurch gekennzeichnet, daß die Lichtleiter (11, 12) zu einem Netzwerk (24) mehrfach vermascht sind.

## Claim

Passive conducting system of branched optical conductors (11, 12), in particular for aircraft, for the transmission of digital optical signals between control members (9) producing control instructions and servo-units (14) actuating control surfaces (1-5) and other control elements, characterised in that the optical conductors (11, 12) are repeatedly intermeshed into a network (24).

## Revendication

Système de commande passif en fibres optiques (11, 12) ramifiées, en particulier pour avions, par transmission de signaux lumineux numériques entre des organes de commande (9) pour création d'instructions de contrôle et des servo-unités (14) pour manœuvrer des gouvernes (1-5) de même que d'autres éléments de pilotage, caractérisé en ce que, les câbles-fibres optiques (11, 12) sont maillés plusieurs fois en un réseau (24).